(19) Europäisches Patentamt
European Patent Office
Office européen des brevets

(11) **EP 4 227 146 A1**

(12) **EUROPEAN PATENT APPLICATION**
published in accordance with Art. 153(4) EPC

(43) Date of publication:
**16.08.2023 Bulletin 2023/33**

(21) Application number: **21888683.6**

(22) Date of filing: **08.11.2021**

(51) International Patent Classification (IPC):
**B60L 15/28** *(2006.01)*

(52) Cooperative Patent Classification (CPC):
Y02T 10/72

(86) International application number:
**PCT/CN2021/129218**

(87) International publication number:
**WO 2022/095991 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.11.2020 CN 202011239644**

(71) Applicant: **China Faw Co., Ltd.**
**Changchun, Jilin 130011 (CN)**

(72) Inventors:
• **LIU, Yuanzhi**
**Changchun, Jilin 130011 (CN)**
• **JIANG, Minghui**
**Changchun, Jilin 130011 (CN)**
• **NAN, Hai**
**Changchun, Jilin 130011 (CN)**
• **ZHANG, Liping**
**Changchun, Jilin 130011 (CN)**
• **GUO, Dingyi**
**Changchun, Jilin 130011 (CN)**
• **SONG, Haoyuan**
**Changchun, Jilin 130011 (CN)**
• **XU, Jialiang**
**Changchun, Jilin 130011 (CN)**

(74) Representative: **Penza, Giancarlo**
**Bugnion S.p.A.**
**Viale Lancetti, 17**
**20158 Milano (IT)**

(54) **VEHICLE TORQUE CONTROL METHOD AND DEVICE, VEHICLE, AND STORAGE MEDIUM**

(57) The present invention provides a vehicle torque control method, which includes that: a vehicle target torque based on a vehicle current state and a vehicle target gear is determined in response to detecting an operation executed by a driver of switching to an opposite gear; a real-time required torque based on the vehicle target torque, a vehicle real-time torque and a vehicle real-time vehicle state is determined in response to the vehicle target torque being greater than or equal to a torque threshold value corresponding to the vehicle current state; and a vehicle is controlled to operate based on the real-time required torque. Further, a vehicle torque control apparatus, a vehicle and a storage medium are provided. By means of judging the vehicle state and gear information during gear switching, and analyzing the vehicle real-time state during the gear switching process period, it is possible to solve the problem in the prior art that, in response to the gear is directly switched to the opposite gear, vehicle impact or jitter is generated easily; and a torque change is finely controlled based on the vehicle state, thereby maintaining the stability of the vehicle while ensuring rapid torque switching, and avoiding generating an impact on the whole vehicle by the torque change, thus improving the driving experience and the driving safety.

Fig. 1

## Description

### Cross-Reference to Related Application

The present invention claims the priority of Chinese Patent Application No.202011239644.8, filed to the China Patent Office on November 09, 2020, and entitled "Vehicle Torque Control Method and Apparatus, Vehicle and Storage Medium", the entire contents of which are herein incorporated by reference.

### Technical Field

The present invention relates to the technical field of vehicle design, and in particular to a vehicle torque control method and apparatus, a vehicle and a storage medium.

### Background

With the increasing awareness of environmental protection, electric vehicles are also rapidly popularized.

Different from traditional vehicles, an electric vehicle has no complex gearbox structure, and forward driving and reverse driving of the whole vehicle may be achieved by means of a positive torque and a negative torque, which are generated by a motor. Meanwhile, the absence of the gearbox structure determines that the electric vehicle is equipped with an electronic gear shifter and has no mechanical gear-switching limiting apparatus, in response to a driver operates a gear switching handle, a control system may recognize a target gear of the driver, and then executes a corresponding gear switching operation. In actual driving, in a state in which the vehicle is not parked stably, it is very common for the driver to switch from a drive gear to a reverse gear, or switch from the reverse gear to the drive gear, in response to the whole vehicle makes a response according to a neutral gear at this time, a relatively long sliding distance is generated, resulting in potential safety hazards, and in response to the whole vehicle is directly switched to an oppositegear, due to the characteristics of a transmission system, emergency switching in the torque direction of the motor may cause impact or jitter of the vehicle, such that the driving experience is poor.

### Summary

At least some embodiments of the present invention provides a vehicle torque control method and apparatus, a vehicle and a storage medium to realize rapid and stable gear switching of the vehicle.

An embodiment of present invention provides a vehicle torque control method, including:

determining a vehicle target torque based on a vehicle current state and a vehicle target gear in response to detecting an operation executed by a driver of switching to an opposite gear;

determining a real-time required torque based on the vehicle target torque, a vehicle real-time torque and a vehicle real-time vehicle state in response to the vehicle target torque being greater than or equal to a torque threshold value corresponding to the vehicle current state; and

controlling a vehicle to operate based on the real-time required torque.

An embodiment of present invention further provide a vehicle torque control apparatus, including:

a target torque determining module, configured to determine a vehicle target torque based on a vehicle current state and a vehicle target gear in response to detecting an operation executed by a driver of switching to an opposite gear;

a first required torque determining module, configured to determine a real-time required torque based on the vehicle target torque, a vehicle real-time torque and a vehicle real-time vehicle state in response to the vehicle target torque being greater than or equal to a torque threshold value corresponding to the vehicle current state; and

a torque control module, configured to control a vehicle to operate based on the real-time required torque.

An embodiment of present invention further provide a vehicle, including:

at least one processor; and

a storage apparatus, configured to store at least one program, wherein

in response to the at least one program is executed by the at least one processor, the at least one processor implements the vehicle torque control method as claimed in an embodiment of the present invention.

An embodiment of present invention further provide a storage medium including computer-executable instructions, wherein in response to executed by a computer processor, the computer-executable instruction are used for executing the vehicle torque control method as claimed in an embodiment of the present invention.

### Brief Description of the Drawings

Fig. 1 is a flowchart of a vehicle torque control method according to a first embodiment of the present invention;

Fig. 2 is a flowchart of a vehicle torque control method according to a second embodiment of the present invention;

Fig. 3 is a flowchart of determining a periodic required torque in the vehicle torque control method according to a second embodiment of the present invention;

Fig. 4 is a schematic principle diagram of the vehicle torque control method according to a second embodiment of the present invention;

Fig. 5 is a torque control effect diagram of the vehicle torque control method according to a second embodiment of the present invention;

Fig. 6 is a structural block diagram of a vehicle torque control apparatus according to a third embodiment of the present invention;

Fig. 7 is a structural block diagram of a vehicle according to a fourth embodiment of the present invention.

## Detailed Description

For a gear switching working condition of an electric vehicle, the following three torque control methods are commonly used currently:
First, after a driver switches the gear, zero-torque control is performed at first, and after the vehicle stops moving, an reverse torque is output, such a control method may result in a relatively long sliding distance of the vehicle, thereby having potential safety hazards, meanwhile, the deceleration of the vehicle depends on braking, in response to the driver steps on an accelerator pedal during the process of the vehicle from moving to stopping period, the vehicle has no torque response, which may confuse the driver.

Second, after the driver switches the gear, the torque transitions from the current value to an opposite target value based on a certain change rate, such a control mode is too rough, it is relatively difficult to set the torque change rate, in response to the rate is too great, the excessively rapid change of the torque may cause impact and jitter of a transmission system, and in response to the rate is relatively slow, the torque change is slow, such that the vehicle continues to travel for a longer distance in the previous gear direction.

Third, after the driver switches the gear, the torque is output as a fixed reverse torque to decelerate the vehicle, and after the vehicle speed is reduced to a certain range, the torque is changed to a target torque. The problem of this control method is that it is not easy to set the fixed reverse torque, and inconsistent deceleration feeling may be caused at different vehicle speeds; second, in response to the torque changes from the current value to the fixed torque value, the characteristics of the transmission system are not considered, resulting in impact and jitter of the transmission system; and in addition, after the vehicle speed is reduced, the transmission system is sensitive to the torque change, and it is very difficult to control the change of the fixed torque to the target torque.

Compared with the above three algorithms, the present invention comprehensively considers factors such as the characteristics of the transmission system, the performance consistency of the whole vehicle, the operation intention of the driver and the like, and thus may respond to the gear switching intention of the driver more quickly and stably.

The present invention will be described in detail below in combination with the drawings and embodiments.

Embodiment One

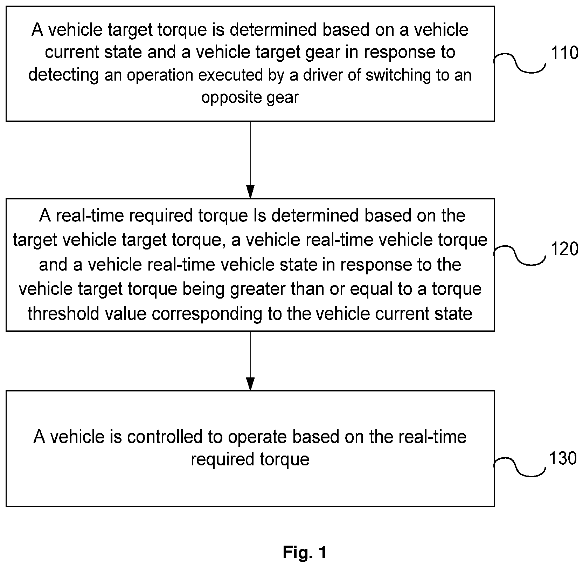

Fig. 1 is a flowchart of a vehicle torque control method according to a first embodiment of the present invention. The present embodiment may be applied to a case where a vehicle is switched to an opposite gear. The method may be executed by a vehicle torque control apparatus. The apparatus may be implemented by software and/or hardware.

As shown in Fig. 1, the method includes the following steps:
In step 110: a vehicle target torque based on a vehicle current state and a vehicle target gear is determined in response to detecting an operation executed by a driver of switching to an opposite gear.

The opposite gear may be understood as a gear that changes the forward direction of a vehicle, for example, the vehicle may generally include a drive gear, a park gear, a neutral gear and a reverse gear, wherein the opposite gear of the drive gear may be the reverse gear, and the opposite gear of the reverse gear may be the drive gear. The vehicle current state may be understood as state information of the vehicle in response to it is detected that the driver switches to the opposite gear, and the vehicle current state may include data such as an opening degree value at which an accelerator pedal is stepped, a vehicle speed of the vehicle, and the like. The vehicle target gear may be understood as a gear to which the driver switches at the current moment. The vehicle target torque may be understood as torque value which the vehicle needs to meet at the current moment in order to meet the current driving requirements of the driver.

Exemplarily, a vehicle torque control apparatus detects that the driver switches to the opposite gear, for example, switches from the drive gear to the reverse gear, or switches from the reverse gear to the drive gear, and the like, and at this time, the vehicle current state may be acquired. A driving state that the driver wants to reach may be judged based on the opening degree value at which the accelerator pedal is stepped in the vehicle current state, for example, in response to the opening degree value at which the accelerator pedal is stepped is relatively large, it indicates that the driver wants to control the vehicle to drive quickly, and in response to the opening degree value at which the accelerator pedal is stepped is relatively small, it indicates that the driver wants to control the vehicle to drive slowly. Based on the vehicle current state and the vehicle target gear, the corresponding vehicle target torque may be calculated.

In step 120: a real-time required torque based on the vehicle target torque, a vehicle real-time torque and a vehicle real-time vehicle state is determined in response to the vehicle target torque being greater than or equal to a torque threshold value corresponding to the vehicle current state.

The torque threshold value may be understood as a torque critical value that affects the stability of the vehicle. The real-time vehicle torque may be understood as torque value, which is acquired in real time during the gear switching process of the vehicle period. The real-time vehicle state may be understood as a vehicle state value, which is acquired by in real time during the gear switching process of the vehicle period, such as a real-time vehicle speed, etc. The real-time required torque may be understood as torque value which the vehicle needs to reach in real time during the gear switching process period.

Exemplarily, a real-vehicle test may be performed on vehicles of different models in advance in order to acquire torque threshold values at which vehicle impact or jitter is generated. In response to the vehicle target torque being greater than or equal to the torque threshold value corresponding to the vehicle current state, it indicates that vehicle impact or jitter is generated if the gear is directly switched based on the vehicle target torque at this time, therefore the real-time vehicle torque may be adjusted based on the real-time vehicle state and in combination with the vehicle target torque, and the real-time required torque is periodically determined. In response to the real-time vehicle torque is close to the torque threshold value corresponding to the real-time vehicle state, the torque change rate of the real-time required torque may be approximately slowed down to reduce the possibility of impact or jitter of the vehicle.

In step 130: the vehicle is controlled to operate based on the real-time required torque.

Exemplarily, the real-time required torque of the vehicle may be acquired periodically, and the vehicle is controlled to drive according to the real-time required torque, therefore on the premise that the vehicle quickly responds to a gear switching operation, the phenomenon of impact or jitter is avoided, thereby maintaining safe and stable driving of the vehicle. In response to the real-time required torque is close to the vehicle target torque, or the real-time required torque is equal to the vehicle target torque, the torque control process of the current gear switching may be exited, and the torque output is controlled based on a normal driving working condition.

Through the technical solution provided in the present embodiment, a vehicle target torque based on a vehicle current state and a vehicle target gear is determined in response to detecting an operation executed by a driver of switching to an opposite gear; a real-time required torque based on the vehicle target torque, a vehicle real-time torque and a vehicle real-time vehicle state is determined in response to the vehicle target torque being greater than or equal to a torque threshold value corresponding to the vehicle current state; and a vehicle is controlled to operate based on the real-time required torque. Further, a vehicle torque control apparatus, a vehicle and a storage medium are provided. By means of judging the vehicle state and gear information during gear switching, and analyzing the vehicle real-time state during the gear switching process period, it is possible to solve the problem in the prior art that, in response to the gear is directly switched to the opposite gear, vehicle impact or jitter is generated easily; and a torque change is finely controlled based on the vehicle state, thereby maintaining the stability of the vehicle while ensuring rapid torque switching, and avoiding generating an impact on the whole vehicle by the torque change, thus improving the driving experience and the driving safety.

Embodiment Two

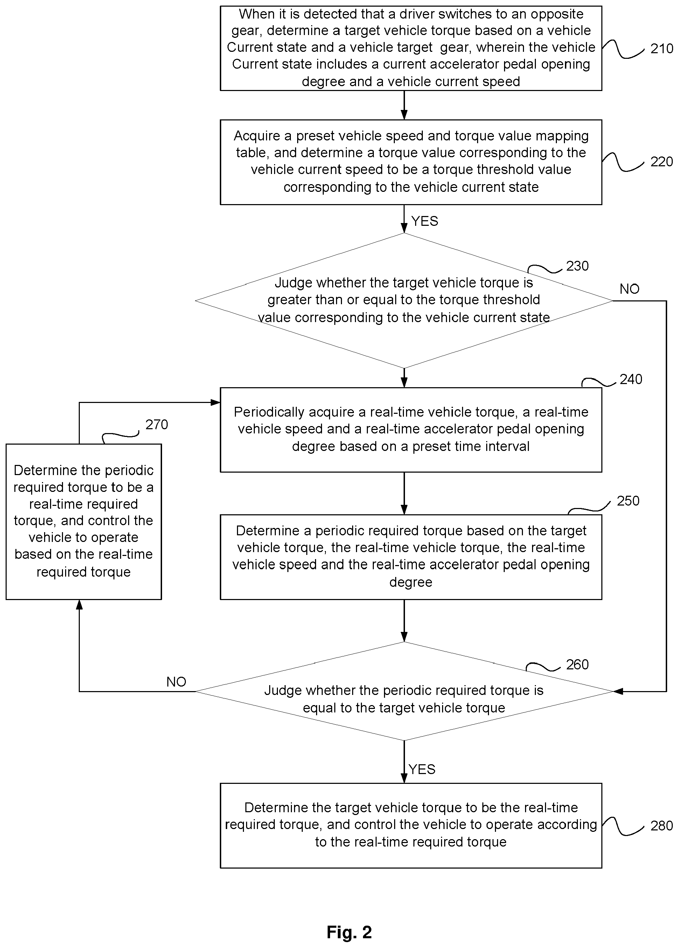

Fig. 2 is a flowchart of a vehicle torque control method according to a second embodiment of the present invention. On the basis of the above-mentioned embodiment, the present embodiment refines the above-mentioned vehicle torque control method.

As shown in Fig. 2, the method includes the following steps:

In step 210: in response to it is detected that a driver switches to an opposite gear, a vehicle target torque based on a vehicle current state and a vehicle target gear is determined, wherein the vehicle current state includes a current accelerator pedal opening degree and a current vehicle speed.

The accelerator pedal opening degree may be understood as an opening degree value at which an accelerator pedal is stepped. The vehicle current speed may be understood as a vehicle speed value at the current moment. That is, the vehicle speed value in response to the driver switches to the opposite gear is detected.

Exemplarily, a vehicle torque control apparatus detects that the driver switches to the opposite gear, for example, switches from the drive gear to the reverse gear, or switches from the reverse gear to the drive gear, and the like. At this time, the vehicle current state may be acquired, and the vehicle current state may includes the current accelerator pedal opening degree and the vehicle current speed. A driving state that the driver wants to reach may be analyzed according to the accelerator pedal opening degree and the vehicle target gear. For example, in response to the accelerator pedal opening degree is relatively large, it indicates that the driver wants to control the vehicle to drive quickly in an opposite direction, and in response to the accelerator pedal opening degree is relatively small, it indicates that the driver wants to control the vehicle to drive slowly in the opposite direction. In combination with the vehicle current speed, it is possible to calculate a vehicle torque which the vehicle needs to meet at the current moment to quickly reach the driving state which the driver wants.

In step 220: a preset vehicle speed and torque value mapping table are acquired, and torque value corresponding to the vehicle current speed is determined to be a torque threshold value corresponding to the vehicle current state.

The vehicle speed and torque value mapping table may be understood as a relationship mapping table for recording torque values, which may cause vehicle impact or jitter in response to the current vehicle is switched to the opposite gear at different driving speeds.

Exemplarily, a real-vehicle test may be performed on vehicles of different models in advance to acquire torque threshold values at which vehicle impact or jitter is generated. In response to different vehicles are switched to the opposite gear in different states, and a mapping relationship is established for vehicle speeds and corresponding torque value to form the vehicle speed and torque value mapping table. In response to the gear is switched to the opposite gear, a corresponding torque value is searched for in the vehicle speed and torque value mapping table based on the vehicle current speed, and the torque value is determined as the torque threshold value corresponding to the vehicle current state.

In step 230: judging whether the vehicle target torque being greater than or equal to the torque threshold value corresponding to the vehicle current state.

Exemplarily, numerical value comparison is performed on the vehicle target torque that is determined based on the vehicle current state and the vehicle target gear with the torque threshold value corresponding to the vehicle current state. At this time, the numerical value comparison is to compare the torque value of the vehicle target torque with the torque value of the torque threshold value, and the numerical value comparison is irrelevant to the torque control direction. For example, in order to conveniently record the torque control direction, in response to positive and negative differentiation is performed on the recording of the torque values, the numerical value comparison may be performed on an absolute value of the vehicle target torque and an absolute value of the torque threshold value in the step. In response to the vehicle target torque being greater than or equal to the torque threshold value corresponding to the vehicle current state, the step 240 is performed. And in response to the vehicle target torque being less than the torque threshold value corresponding to the real-time vehicle state, the step 280 is performed.

In step 240: a real-time vehicle torque, a real-time vehicle speed and a real-time accelerator pedal opening degree is acquired periodically based on a preset time interval.

The preset time interval may be understood as a preset periodic time interval taken for updating a periodic required torque. The real-time vehicle torque may be understood as an actual torque value of the vehicle, which is acquired at the beginning of the current time period. The real-time vehicle speed may be understood as an actual vehicle speed value of the vehicle, which is acquired at the beginning of the current period. The real-time accelerator pedal opening degree may be understood as an opening degree value at which the accelerator pedal is stepped by the driver and which is acquired at the beginning of the current time period.

Exemplarily, a corresponding periodic time interval may be preset based on the performance of different vehicles, and the real-time vehicle torque, the real-time vehicle speed and the real-time accelerator pedal opening degree may be acquired again after each preset time interval to accurately calculate torque value that needs to be output in the next time period.

In step 250: a periodic required torque is determined based on the vehicle target torque, the real-time vehicle torque, the real-time vehicle speed and the real-time accelerator pedal opening degree.

The periodic required torque may be understood as a torque expected value that is controlled to be output within one time period.

Exemplarily, the periodic required torque in the current time period may be determined according to the real-time vehicle torque, the real-time vehicle speed and the real-time accelerator pedal opening degree, which are acquired at the beginning of the current time period, and in combination with the vehicle target torque. The periodic required torque meets the condition of generating no impact or jitter on the premise that the vehicle quickly responds to a gear switching operation. The periodic required torque capable of quickly responding to the gear switching operation may be calculated based on the vehicle target torque and the real-time vehicle torque, and the periodic required torque is properly adjusted based on the real-time accelerator pedal opening degree and the real-time vehicle speed.

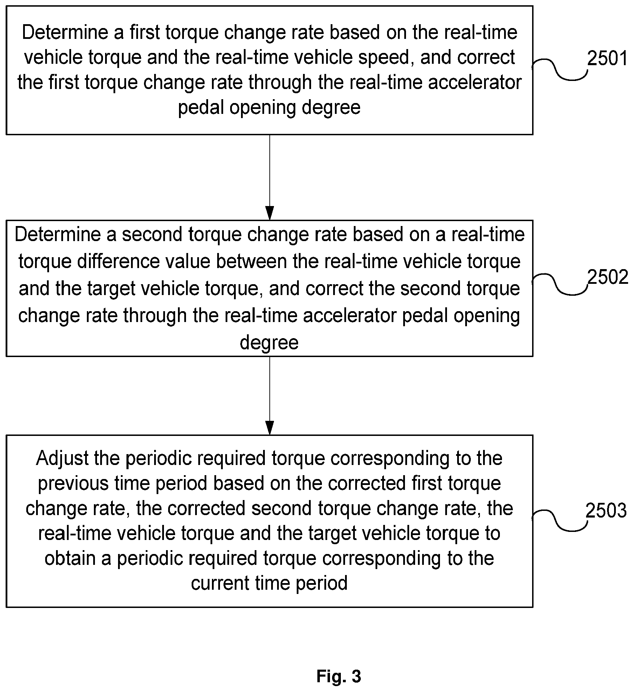

Optionally, Fig. 3 is a flowchart of determining the periodic required torque in the vehicle torque control method according to a second embodiment of the present invention. As shown in Fig. 3, the step 250 may include the following steps:

In step 2501: a first torque change rate is determined based on the real-time vehicle torque and the real-time vehicle speed, and the first torque change rate is corrected through the real-time accelerator pedal opening degree.

Optionally, the step of determining the first torque change rate based on the real-time vehicle torque and the real-time vehicle speed may include the following steps: a preset torque and change rate mapping table are acquired, and a first candidate change rate corresponding to the real-time vehicle torque is searched for; in response to the difference between the real-time vehicle torque and a real-time torque threshold value corresponding to the real-time vehicle speed being less than a preset torque difference value, a difference value between the first candidate change rate and a first preset change adjustment value is determined as the first torque change rate; and in response to the difference between the real-time vehicle torque and the real-time torque threshold value corresponding to the real-time vehicle speed being greater than or equal to the preset torque difference value, the first candidate change rate is determined as the first torque change rate.

Exemplarily, the preset torque and change rate mapping table may be searched for based on the real-time vehicle torque to obtain the first candidate change rate corresponding to the real-time vehicle torque. The real-time torque threshold value corresponding to the real-time vehicle speed is searched for, in response to the difference between the real-time vehicle torque and the real-time torque threshold value corresponding to the real-time vehicle speed being less than the preset torque difference value, it indicates that the current output torque of the vehicle is close to the torque threshold value which causes vehicle impact or jitter, so that the first candidate change rate may be properly reduced to obtain the first torque change rate, thereby preventing an impact on the transmission system by a too fast torque change. Meanwhile, the first torque change rate may be corrected based on the real-time accelerator pedal opening degree, the greater the accelerator pedal opening degree is, the higher the first torque change rate may be properly adjusted to quickly respond to the operation of the driver. In response to the difference between the real-time vehicle torque and the real-time torque threshold value corresponding to the real-time vehicle speed being greater than or equal to the preset torque difference value, it indicates that no vehicle impact or jitter will be caused in response to the vehicle operates at the current output torque within a short time, so that the first candidate change rate may be directly determined to be the first torque change rate.

In step 2502: a second torque change rate is determined based on a real-time torque difference value between the real-time vehicle torque and the vehicle target torque, and correcting the second torque change rate by using the real-time accelerator pedal opening degree.

Optionally, the step of determining the second torque change rate according to the real-time torque difference value between the real-time vehicle torque and the vehicle target torque may include: determining the real-time torque difference value between the real-time vehicle torque and the vehicle target torque, and searching for a preset torque difference and change rate mapping table to obtain the second torque change rate corresponding to the real-time torque difference value.

Exemplarily, the difference between the real-time vehicle torque and the vehicle target torque may be calculated to obtain the real-time torque difference value, and the preset torque difference and change rate mapping table is searched for to obtain the second torque change rate corresponding to the real-time torque difference value. In response to the greater the real-time torque difference value is, the greater the second torque change rate is. In response to the real-time torque difference value is smaller, the second torque change rate is also properly reduced, and specific numerical values may be manually calibrated. Meanwhile, the second torque change rate may be corrected based on the real-time accelerator pedal opening degree. In response to the greater the accelerator pedal opening degree is, the higher the second torque change rate may be properly adjusted to quickly respond to the operation of the driver.

In step 2503: the periodic required torque corresponding to the previous period is adjusted based on the corrected first torque change rate, the corrected second torque change rate, the real-time vehicle torque and the vehicle target torque to obtain aperiodic required torque corresponding to the current time period.

Optionally, the step 2503 may include the following steps: a first torque change value and a second torque change value in the preset time interval are determined based on the corrected first torque change rate and the corrected second torque change rate; a minimum torque change value among the first torque change value, the second torque change value and the real-time torque difference value are determined; in response to the vehicle target torque being greater than or equal to the real-time vehicle torque, the periodic required torque corresponding to the previous time period with the minimum torque change value is added to obtain the periodic required torque corresponding to the current time period; and in response to the vehicle target torque being less than the real-time vehicle torque, the minimum torque change value from the periodic required torque corresponding to the previous time period is subtracted to obtain the periodic required torque corresponding to the current time period.

Exemplarily, based on the corrected first torque change rate, the corrected second torque change rate, the real-time vehicle torque and the vehicle target torque, the periodic required torque corresponding to the previous time period may be adjusted on the premise of quickly responding to the gear switching operation and the phenomenon of impact or jitter is avoided to obtain the periodic required torque corresponding to the current time period. The calculated corrected first torque change rate and the corrected second torque change rate are respectively multiplied by the preset time interval to obtain the first torque change value and the second torque change value, a minimum value is selected from the first torque change value, the second torque change value and the real-time torque difference value to adjust the periodic required torque corresponding to the previous time period to obtain the periodic required torque corresponding to the current time period, and the operation may ensure that the vehicle generates no impact or jitter.

In order to facilitate understanding, the real-time vehicle torque may be denoted as $T_{act}$, the determined corrected first torque change rate may be denoted as denoted as $G_1$, the vehicle target torque may be denoted as $T_{tgt}$, the real-time torque difference may be denoted as $\Delta T$, the determined corrected second torque change rate may be denoted as $G_2$, the periodic required torque corresponding to the previous time period may be denoted as $T_{delay}$, the periodic required torque corresponding to the current time period may be denoted as $T_{req}$, the preset time interval may be denoted as $\Delta t$, and in response to the vehicle target torque $T_{tgt} \geq$ the real-time vehicle torque $T_{act}$, the periodic required torque $T_{req}$ corresponding to the current time period may be calculated based on the following formula:

$$T_{req} = T_{delay} + \min(G_1\Delta t, G_2\Delta t, \Delta T)$$

In response to the vehicle target torque $T_{tgt} <$ the real-time vehicle torque $T_{act}$, the periodic required torque $T_{req}$ corresponding to the current time period may be calculated based on the following formula:

$$T_{req} = T_{delay} - \min(G_1\Delta t, G_2\Delta t, \Delta T)$$

In step 260: judging whether the periodic required torque is equal to the vehicle target torque.

Exemplarily, after the periodic required torque of the current time period is calculated, the periodic required torque is compared with the vehicle target torque. In response to the periodic required torque is equal to the vehicle target torque, the step 280 is performed. In response to the periodic required torque is not equal to the vehicle target torque, the step 270 is performed.

In step 270: the periodic required torque is determined to be a real-time required torque, and the vehicle is controlled to operate based on the real-time required torque.

Exemplarily, the periodic required torque may be determined to be the real-time required torque within the current time period, the vehicle is controlled to operate based on the real-time required torque, and after the current time period is ended. The step 240 is performed to acquire the real-time vehicle torque once more, the real-time vehicle speed and the real-time accelerator pedal opening degree once more to determine the periodic required torque in the next time period.

In step 280: the vehicle target torque is determined to be the real-time required torque, and the vehicle is controlled to operate based on the real-time required torque.

Exemplarily, in response to the vehicle target torque being less than the torque threshold value corresponding to the vehicle current state, it may be considered that vehicle impact or jitter will not be generated in response to the vehicle being directly controlled to drive based on the vehicle target torque, thus the vehicle target torque may be determined to be the real-time required torque, and the vehicle is controlled to operate based on the real-time required torque. Otherwise, in response to the periodic required torque being equal to the vehicle target torque, it may be considered that the real-time vehicle torque has been very close to the vehicle target torque at this time, thus the vehicle target torque may be determined to be the real-time required torque, and the vehicle is controlled to operate according to the real-time required torque. In response to the real-time vehicle torque is equal to the vehicle target torque, the torque control process of the current gear switching may be exited, and the torque output is controlled based on the normal driving working condition.

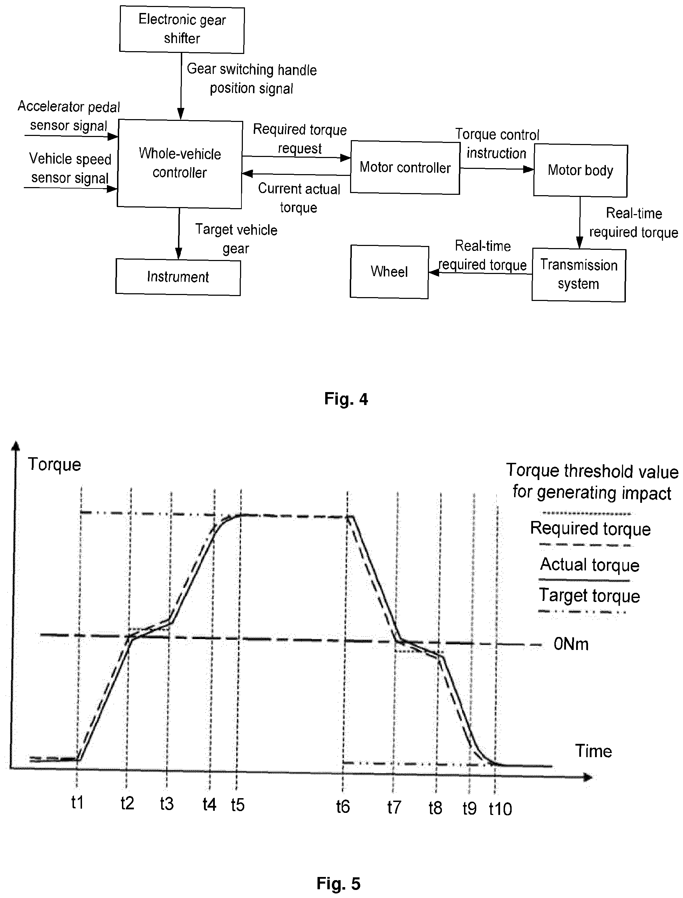

Exemplarily, Fig. 4 is a schematic principle diagram of the vehicle torque control method according to a second embodiment of the present invention. As shown in Fig. 4, a torque control system in the embodiment of the present invention may include a whole-vehicle controller, an electronic gear shifter, an instrument, a motor controller, a motor body, a transmission system, wheels, an accelerator pedal sensor, and a vehicle speed sensor. During a gear switching process period, the electronic gear shifter may recognize the operation of the driver, convert the same into a gear switching handle position signal, and send the gear switching handle position signal to the whole-vehicle controller. The whole-vehicle controller may receive the gear switching handle position signal sent by the electronic gear shifter, recognize a gear switching intention of the driver, determine the vehicle target gear, parse the current accelerator pedal opening degree and the vehicle current speed by means of signals sent by the accelerator pedal sensor and the vehicle speed sensor, send a required torque request of the gear switching process, and send vehicle target gear information to the instrument. The instrument may receive the vehicle target gear information sent by the whole-vehicle controller, and display the vehicle target gear. The motor controller receives the required torque request sent by the whole-vehicle controller, converts the required torque request into a torque control instruction, sends the torque control instruction to the motor body, and meanwhile feeds back the current actual torque to the whole-vehicle controller. The motor body is controlled by the motor controller, and outputs a corresponding torque after receiving the torque control instruction. The transmission system transmits, to the wheels, the torque sent by the motor body to complete whole-vehicle driving or braking.

Fig. 5 is a torque control effect diagram of the vehicle torque control method according to a second embodiment of the present invention. As shown in Fig. 5, the driver switches from the reverse gear (R gear) to the drive gear (D) gear at a moment $t_1$, and a time period $t_1$-$t_5$ is a process of the output torque changing from negative to positive, wherein the positive and negative states of the torque represents the direction of the torque. At the moment $t_1$, it is detected that the driver has an intention of switching the gear, the vehicle target torque changes suddenly, within a time period $t_1$-$t_2$, the change rate of the real-time required torque is determined based on a difference value between the vehicle target torque and the real-time vehicle torque, and meanwhile is corrected based on the real-time accelerator pedal opening degree; within a time period $t_2$-$t_3$, the real-time required torque is properly reduced near the torque threshold value at which an impact is generated, and meanwhile may also be corrected by the accelerator pedal opening degree; within a time period $t_3$-$t_4$, after the torque threshold value at which the impact is generated, the real-time required torque may change quickly and is consistent with the change rate within the time period $t_1$-$t_2$. At a moment $t_4$, the real-time required torque is close to the vehicle target torque, the torque change rate may be slowed down at this time. At a moment $t_5$, the real-time required torque is equal to the vehicle target torque, the torque control process of current gear switching may be exited, and the torque output is controlled according to the normal driving working condition. A moment $t_6$ may be expressed as that the driver switches from the drive gear (D gear) to the reverse gear (R gear), and a time period $t_6$-$t_{10}$ may be expressed as a process of the torque changing from positive to negative change, which is consistent with the time period torque control principle of the time period $t_1$-$t_5$.

Based on the technical solution of the present embodiment, in response to it is detected that the driver switches to the opposite gear, the vehicle target torque is determined based on the vehicle current state and the vehicle target gear; and a size relationship between the vehicle target torque and the torque threshold value corresponding to the vehicle current state is judged based on the preset vehicle speed and torque value mapping table. In response to the vehicle target torque being greater than or equal to the torque threshold value corresponding to the vehicle current state, the real-time vehicle torque, the real-time vehicle speed and the real-time accelerator pedal opening degree are acquired periodically based on the preset time interval. The periodic required torque is determined based on the vehicle target torque, the real-time vehicle torque, the real-time vehicle speed and the real-time accelerator pedal opening degree. In response to the periodic required torque being not equal to the vehicle target torque, the periodic required torque is determined to be the real-time required torque, the vehicle is controlled to operate based on the real-time required torque, and then the periodic required torque corresponding to the next period is calculated. By means of judging the vehicle state and gear information during gear switching, and analyzing the real-time vehicle state during the gear switching process to continuously and dynamically adjust the required torque of the vehicle, it is possible to solve the problem in the prior art that, in response to the gear is directly switched to the opposite gear, vehicle impact or jitter is generated easily. A torque change is finely controlled based on the vehicle state, thereby maintaining the stability of the vehicle while ensuring rapid torque switching, and avoiding generating an impact on the whole vehicle by the torque change, thus improving the driving experience and the driving safety.

Embodiment Three

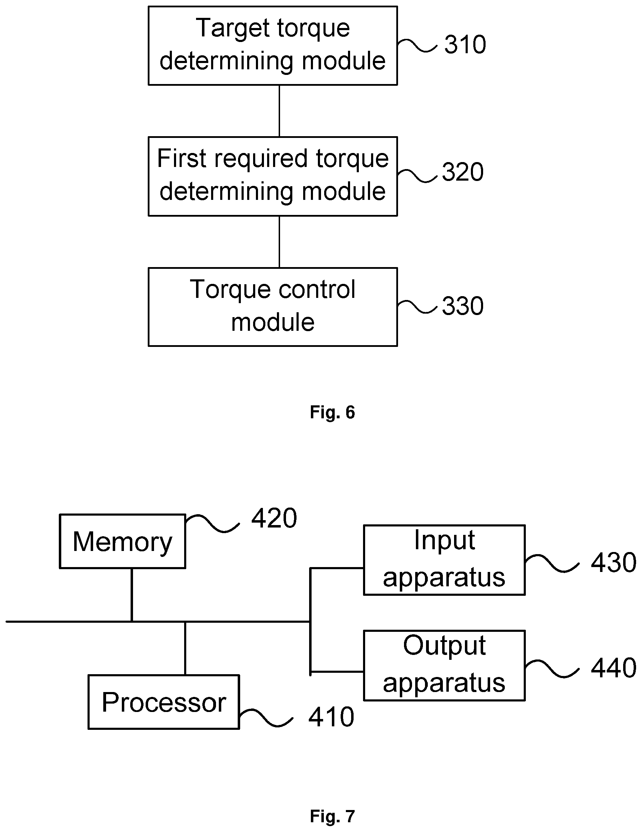

A vehicle torque control apparatus provided in the embodiment of the present invention may execute the vehicle torque control method provided in any embodiment of the present invention, and has corresponding functional modules configured to execute the method. Fig. 6 is a structural block diagram of a vehicle torque control apparatus according to a third embodiment of the present invention, and as shown in Fig. 6, the apparatus includes a target torque determining module 310, a first required torque determining module 320 and a torque control module 330.

The target torque determining module 310 is configured to determine a vehicle target torque based on a vehicle current state and a vehicle target gear in response to detecting an operation executed by a driver of switching to an opposite gear.

The first required torque determining module 320 is configured to determine a real-time required torque based on the vehicle target torque, a vehicle real-time torque and a vehicle real-time vehicle state in response to the vehicle target torque being greater than or equal to a torque threshold value corresponding to the vehicle current state.

The torque control module 330 is configured to control a vehicle to operate based on the real-time required torque.

Based on the technical solution of the present embodiment, in response to it is detected that the driver switches to the opposite gear, the vehicle target torque is determined based on the vehicle current state and the vehicle target gear. In response to the vehicle target torque being greater than or equal to the torque threshold value corresponding to the vehicle current state, the real-time required torque is determined based on the vehicle target torque, the real-time vehicle torque and the real-time vehicle state; and the vehicle is controlled to operate based on the real-time required torque. By means of judging the vehicle state and gear information during gear switching, and analyzing the real-time vehicle state during the gear switching process, it is possible to solve the problem in the prior art that, in response to the gear is directly switched to the opposite gear, vehicle impact or jitter is generated easily; and a torque change is finely controlled based on the vehicle state, thereby maintaining the stability of the vehicle while ensuring rapid torque switching, and avoiding generating an impact on the whole vehicle by the torque change, thus improving the driving experience and the driving safety.

Optionally, the apparatus further includes a second required torque determining module 340, and the second required torque determining module 340 is configured to:
in response to the vehicle target torque is less than the torque threshold value corresponding to the vehicle current state, determine the vehicle target torque to be the real-time required torque.

Optionally, the vehicle current state includes a current accelerator pedal opening degree and a vehicle current speed; and
correspondingly, the process of determining the torque threshold value includes:
a preset vehicle speed and torque value mapping table are acquired, and torque value corresponding to the vehicle current speed is determined to be the torque threshold value corresponding to the vehicle current state.

Optionally, the step of determining the real-time required torque based on the vehicle target torque, the real-time vehicle torque and the real-time vehicle speed includes:

the real-time vehicle torque, a real-time vehicle speed and a real-time accelerator pedal opening degree are acquired periodically based on a preset time interval;

for each time period, a periodic required torque is determined based on the vehicle target torque, the real-time vehicle torque, the real-time vehicle speed and the real-time accelerator pedal opening; and

the periodic required torque is determined to be the real-time required torque, until the periodic required torque is equal to the vehicle target torque.

Optionally, the step of determining the periodic required torque based on the vehicle target torque, the real-time vehicle torque, the real-time vehicle speed and the real-time accelerator pedal opening includes:

a first torque change rate is determined based on the real-time vehicle torque and the real-time vehicle speed, and the first torque change rate is corrected through the real-time accelerator pedal opening degree;

a second torque change rate is determined based on a real-time torque difference value between the real-time vehicle torque and the vehicle target torque, and the second torque change rate is corrected through the real-time accelerator pedal opening degree; and

the periodic required torque corresponding to the previous period is adjusted based on the corrected first torque change rate, the corrected second torque change rate, the real-time vehicle torque and the vehicle target torque to obtain a periodic required torque corresponding to the current time period.

Optionally, the step of determining the first torque change rate based on the real-time vehicle torque and the real-time vehicle speed includes:

a preset torque and change rate mapping table are acquired, and a first candidate change rate corresponding to the real-time vehicle torque is searched for;

in response to the difference between the real-time vehicle torque and a real-time torque threshold value corresponding to the real-time vehicle speed being less than a preset torque difference value, taking a difference value between the first candidate change rate and a first preset change adjustment value as the first torque change rate; and

in response to the difference between the real-time vehicle torque and the real-time torque threshold value corresponding to the real-time vehicle speed being greater than or equal to the preset torque difference value, taking the first candidate change rate as the first torque change rate; and

the step of determining the second torque change rate based on the real-time torque difference value between the real-time vehicle torque and the vehicle target torque includes:
the real-time torque difference value between the real-time vehicle torque and the vehicle target torque is determined, and a preset torque difference and change rate mapping table are searched for to obtain the second torque change rate corresponding to the real-time torque difference value.

Optionally, the step of adjusting the periodic required torque corresponding to the previous period based on the corrected first torque change rate, the corrected second torque change rate, the real-time vehicle torque and the vehicle target torque to obtain the periodic required torque corresponding to the current time period includes:

a first torque change value and a second torque change value within the preset time interval are determined based on the corrected first torque change rate and the corrected second torque change rate;

a minimum torque change value is determined among the first torque change value, the second torque change value and the real-time torque difference value;

in response to the vehicle target torque being greater than or equal to the real-time vehicle torque, the periodic required torque corresponding to the previous period with the minimum torque change value are added to obtain the periodic required torque corresponding to the current time period; and

in response to the vehicle target torque being less than the real-time vehicle torque, the minimum torque change value from the periodic required torque corresponding to the previous period are subtracted to obtain the periodic required torque corresponding to the current time period.

Based on the technical solution of the present embodiment, in response to it is detected that the driver switches to the opposite gear, the vehicle target torque is determined based on the vehicle current state and the vehicle target gear; and a size relationship between the vehicle target torque and the torque threshold value corresponding to the vehicle current state is judged based on the preset vehicle speed and torque value mapping table. In response to the vehicle target torque being greater than or equal to the torque threshold value corresponding to the vehicle current state, the real-time vehicle torque, the real-time vehicle speed and the real-time accelerator pedal opening degree are acquired periodically based on the preset time period interval, the periodic required torque is determined based on the vehicle target torque, the real-time vehicle torque, the real-time vehicle speed and the real-time accelerator pedal opening degree, in response to the periodic required torque being not equal to the vehicle target torque, the periodic required torque is determined to be the real-time required torque, the vehicle is controlled to operate based on the real-time required torque, and then the periodic required torque corresponding to the next time period is calculated. By means of judging the vehicle state and gear information during gear switching, and analyzing the real-time vehicle state during the gear switching process to continuously and dynamically adjust the required torque of the vehicle, it is possible to solve the problem in the prior art that, in response to the gear is directly switched to the opposite gear, vehicle impact or jitter is generated easily; and a torque change is finely controlled based on the vehicle state, thereby maintaining the stability of the vehicle while ensuring rapid torque switching, and avoiding generating an impact on the whole vehicle by the torque change, thus improving the driving experience and the driving safety.

Embodiment Four

Fig. 7 is a structural block diagram of a vehicle according to a fourth embodiment of the present invention. As shown in Fig. 7, the vehicle includes a processor 410, a memory 420, an input apparatus 430 and an output apparatus 440; there may be at least one processors 410 in the vehicle, and one processor 410 is taken as an example in Fig. 7; and the processor 410, the memory 420, the input apparatus 430 and the output apparatus 440 in the vehicle may be connected by a bus or in other manners, and a bus connection is taken as an example in Fig. 7.

The memory 420, as a computer-readable storage medium, may be configured to store software programs, computer-executable programs and modules, for example, program instructions/modules (for example, the target torque determining module 310, the first required torque determining module 320 and the torque control module 330 in the vehicle torque control apparatus) corresponding to the vehicle torque control method in the embodiments of the present invention. The processor 410 executes various functional applications and data processing of the vehicle by means of running the software programs, instructions and modules stored in the memory 420, implements the vehicle torque control method in any embodiment mentioned above.

The memory 420 may mainly include a program storage area and a data storage area, wherein the program storage area may store application programs required by an operating system and at least one function; and the data storage area may store data created based on the use of a terminal, etc. In addition, the memory 420 may include a high-speed random access memory, and may also include a nonvolatile memory, such as at least one magnetic disk storage device, a flash memory device, or other nonvolatile solid-state storage devices. In some instances, the memory 420 may include memories that are disposed remotely relative to the processor 410, and these remote memories may be connected to the vehicle by a network. Instances of the network include, but are not limited to, the Internet, an intranet, a local area network, a mobile communication network, and combinations thereof.

The input apparatus 430 may be configured to receive input digital or character information, and generate a key signal input related to the user settings and function control of the vehicle. The output apparatus 440 may include a display device such as a display screen.

Embodiment Five

Embodiment 5 of the present invention further provides a storage medium including a computer-executable instruction, wherein the computer-executable instruction is taken for, in response to being executed by a computer processor, executing a vehicle torque control method, and the method includes:

in response to detecting an operation executed by a driver of switching to an opposite gear, determining a vehicle target torque based on a vehicle current state and a vehicle target gear;

in response to that the vehicle target torque being greater than or equal to a torque threshold value corresponding to the vehicle current state, determining a real-time required torque based on the vehicle target torque, a real-time vehicle torque and a real-time vehicle state; and

controlling a vehicle to operate based on the real-time required torque.

Of course, in the storage medium including the computer-executable instruction provided by the embodiment of the present invention, the computer-executable instruction is not limited to the operations of the method as described above, and related operations in the vehicle torque control method provided in any embodiment of the present invention may also be executed.

By means of the above descriptions of the embodiments, those skilled in the art to which the present invention belongs may understand that, the present invention may be implemented by software and necessary universal hardware, and of course, may also be implemented by hardware. Based on this understanding, the technical solutions of the present invention essentially or the part contributing to the prior art may be embodied in the form of a software product, the computer software product is stored in a storage medium, such as a floppy disk of a computer, a read-only memory (Read-Only Memory, ROM), a random access memory (Random Access Memory, RAM), a flash memory (FLASH), a hard disk and an optical disk, and the like, and include several instructions for instructing a computer device (may be a mobile phone, a computer, a server, or a network device and the like) to execute the method in various embodiments of the present invention.

It is worth noting that, in the embodiments of the vehicle torque control apparatus, the units and modules included therein are only divided based on functional logic, but are not limited to the above-mentioned division, as long as corresponding functions may be implemented; and in addition, the specific names of the functional units are merely for facilitating mutual differentiation, and are not taken for limiting the protection scope of the present invention.

## Claims

1.  A vehicle torque control method, comprising:

    determining a vehicle target torque based on a vehicle current state and a vehicle target gear in response to detecting an operation executed by a driver of switching to an opposite gear; determining a real-time required torque based on the vehicle target torque, a vehicle real-time torque and a vehicle real-time vehicle state in response to the vehicle target torque being greater than or equal to a torque threshold value corresponding to the vehicle current state; and controlling a vehicle to operate based on the real-time required torque.

2.  The method as claimed in claim 1, further comprising:
    determining the vehicle target torque as the real-time required torque in response to the vehicle target torque being less than the torque threshold value corresponding to the vehicle current state.

3.  The method as claimed in claim 1, wherein the vehicle current state comprises a current accelerator pedal opening degree and a current vehicle speed; and determining the torque threshold value comprises:
    acquiring a preset vehicle speed and torque value mapping table, and determining a torque value corresponding to the vehicle current speed as the torque threshold value corresponding to the vehicle current state.

4.  The method as claimed in claim 3, wherein determining the real-time required torque based on the vehicle target torque, the vehicle real-time torque and the vehicle real-time state comprises:

    acquiring periodically the real-time vehicle torque, a real-time vehicle speed and a real-time accelerator pedal opening degree based on a preset time interval; determining a periodic required torque based on the vehicle target torque, the real-time vehicle torque, the real-time vehicle speed and the real-time accelerator pedal opening for each time period; and determining the periodic required torque as the real-time required torque, until the periodic required torque is equal to the target vehicle torque.

5.  The method as claimed in claim 4, wherein determining the periodic required torque based on the target vehicle torque, the real-time vehicle torque, the real-time vehicle speed and the real-time accelerator pedal opening comprises:

    determining a first torque change rate based on the vehicle real-time torque and the vehicle real-time speed, and correcting the first torque change rate through the real-time accelerator pedal opening degree; determining a second torque change rate based on a real-time torque difference value between the vehicle real-time torque and the vehicle target torque, and correcting the second torque change rate through the real-time accelerator pedal opening degree; and

adjusting the periodic required torque corresponding to the previous time period based on the corrected first torque change rate, the corrected second torque change rate, the vehicle real-time torque and the vehicle target torque to obtain a periodic required torque corresponding to a current time period.

6. The method as claimed in claim 5, wherein determining the first torque change rate based on the vehicle real-time torque and the vehicle real-time speed comprises:

acquiring a preset torque and change rate mapping table, and searching for a first candidate change rate corresponding to the vehicle real-time torque;
in response to the difference between the vehicle real-time torque and a real-time torque threshold value corresponding to the real-time vehicle speed being less than a preset torque difference value, determining a difference value between the first candidate change rate and a first preset change adjustment value as the first torque change rate; and
in response to the difference between the vehicle real-time torque and the real-time torque threshold value corresponding to the real-time vehicle speed being greater than or equal to the preset torque difference value, determining the first candidate change rate as the first torque change rate; and
the process of determining the second torque change rate based on the real-time torque difference value between the real-time vehicle torque and the vehicle target torque comprises:
determining the real-time torque difference value between the vehicle real-time torque and the vehicle target torque, and searching for the preset torque difference and change rate mapping table to obtain the second torque change rate corresponding to the real-time torque difference value.

7. The method as claimed in claim 5, wherein adjusting the periodic required torque corresponding to the previous time period based on the corrected first torque change rate, the corrected second torque change rate, the vehicle real-time torque and the vehicle target torque to obtain the periodic required torque corresponding to the present time period comprises:

determining a first torque change value and a second torque change value in the current time period interval based on the corrected first torque change rate and the corrected second torque change rate;

determining a minimum torque change value among the first torque change value, the second torque change value and the real-time torque difference value;
in response to the vehicle target torque being greater than or equal to the vehicle real-time torque, adding the periodic required torque corresponding to the previous time period with the minimum torque change value to obtain the periodic required torque corresponding to the current time period; and
in response to the vehicle target torque being less than the vehicle real-time torque, subtracting the minimum torque change value from the periodic required torque corresponding to the previous time period to obtain the periodic required torque corresponding to the current time period.

8. A vehicle torque control apparatus, comprising:

a target torque determining module, configured to determine a vehicle target torque based on a vehicle current state and a vehicle target gear in response to detecting an operation executed by a driver of switching to an opposite gear;
a first required torque determining module, configured to determine a real-time required torque based on the vehicle target torque, a vehicle real-time torque and a vehicle real-time vehicle state in response to the vehicle target torque being greater than or equal to a torque threshold value corresponding to the vehicle current state; and
a torque control module, configured to control a vehicle to operate based on the real-time required torque.

9. A vehicle, comprising:

at least one processor; and
a storage apparatus, configured to store at least one program, wherein
in response to the at least one program is executed by the at least one processor, the at least one processor implements the vehicle torque control method as claimed in any one of claims 1-7.

10. A storage medium comprising computer-executable instructions, wherein in response to executed by a computer processor, the computer-executable instructions are used for executing the vehicle torque control method as claimed in any one of claims 1-7.

A vehicle target torque is determined based on a vehicle current state and a vehicle target gear in response to detecting an operation executed by a driver of switching to an opposite gear ⟩ 110

A real-time required torque Is determined based on the target vehicle target torque, a vehicle real-time vehicle torque and a vehicle real-time vehicle state in response to the vehicle target torque being greater than or equal to a torque threshold value corresponding to the vehicle current state ⟩ 120

A vehicle is controlled to operate based on the real-time required torque ⟩ 130

**Fig. 1**

When it is detected that a driver switches to an opposite gear, determine a target vehicle torque based on a vehicle Current state and a vehicle target gear, wherein the vehicle Current state includes a current accelerator pedal opening degree and a vehicle current speed — 210

Acquire a preset vehicle speed and torque value mapping table, and determine a torque value corresponding to the vehicle current speed to be a torque threshold value corresponding to the vehicle current state — 220

YES

230 Judge whether the target vehicle torque is greater than or equal to the torque threshold value corresponding to the vehicle current state

NO

240 Periodically acquire a real-time vehicle torque, a real-time vehicle speed and a real-time accelerator pedal opening degree based on a preset time interval

270 Determine the periodic required torque to be a real-time required torque, and control the vehicle to operate based on the real-time required torque

250 Determine a periodic required torque based on the target vehicle torque, the real-time vehicle torque, the real-time vehicle speed and the real-time accelerator pedal opening degree

NO

260 Judge whether the periodic required torque is equal to the target vehicle torque

YES

280 Determine the target vehicle torque to be the real-time required torque, and control the vehicle to operate according to the real-time required torque

Fig. 2

Determine a first torque change rate based on the real-time vehicle torque and the real-time vehicle speed, and correct the first torque change rate through the real-time accelerator pedal opening degree  2501

Determine a second torque change rate based on a real-time torque difference value between the real-time vehicle torque and the target vehicle torque, and correct the second torque change rate through the real-time accelerator pedal opening degree  2502

Adjust the periodic required torque corresponding to the previous time period based on the corrected first torque change rate, the corrected second torque change rate, the real-time vehicle torque and the target vehicle torque to obtain a periodic required torque corresponding to the current time period  2503

**Fig. 3**

**Fig. 4**

**Fig. 5**

```
┌─────────────────────────┐
│   Target torque         │  ⌇ 310
│   determining module    │
└─────────────────────────┘
            │
┌─────────────────────────┐
│   First required torque │  ⌇ 320
│   determining module    │
└─────────────────────────┘
            │
┌─────────────────────────┐
│   Torque control        │  ⌇ 330
│   module                │
└─────────────────────────┘
```

**Fig. 6**

```
┌──────────────┐                    ┌──────────────┐
│   Memory     │ ⌇ 420              │    Input     │ ⌇ 430
└──────────────┘                    │  apparatus   │
       │                            └──────────────┘
       │                    ┌───────────│
───────┼────────────────────┤
       │                    └───────────┐
┌──────────────┐                    ┌──────────────┐
│  Processor   │                    │   Output     │ ⌇ 440
└──────────────┘ ⌇ 410              │  apparatus   │
                                    └──────────────┘
```

**Fig. 7**

## INTERNATIONAL SEARCH REPORT

| | International application No. |
|---|---|
| | **PCT/CN2021/129218** |

**A. CLASSIFICATION OF SUBJECT MATTER**

B60L 15/28(2006.01)i

According to International Patent Classification (IPC) or to both national classification and IPC

**B. FIELDS SEARCHED**

Minimum documentation searched (classification system followed by classification symbols)

B60L

Documentation searched other than minimum documentation to the extent that such documents are included in the fields searched

Electronic data base consulted during the international search (name of data base and, where practicable, search terms used)

WPI, EPODOC, CNPAT, CNKI: 中国第一汽车股份有限公司, 刘元治, 姜明慧, 南海, 张立平, 郭丁伊, 宋浩源, 徐家良, 反向挡, 前进挡, 后退挡, 换挡, 切换, 扭矩, 转矩, 冲击, 抖动, 目标挡位, 目标扭矩, 阈值, 实时扭矩, 实时状态, 油门踏板, 加速踏板, 车速, 映射表, 周期, 变化率, 控制装置, 处理器, 存储装置, 介质, 程序, vehicle, torque, target, shift+, switch, opposite, reverse, shock, impact, threshold, accelerator, pedal, controller, processor, program, storage, medium

**C. DOCUMENTS CONSIDERED TO BE RELEVANT**

| Category* | Citation of document, with indication, where appropriate, of the relevant passages | Relevant to claim No. |
|---|---|---|
| PX | CN 112339576 A (CHINA FAW GROUP CORPORATION) 09 February 2021 (2021-02-09) claims 1-10 | 1-10 |
| Y | CN 103587427 A (SHANGHAI VOLKSWAGEN AUTOMOTIVE CO, LTD.) 19 February 2014 (2014-02-19) description, paragraphs 0018-0024, figure 1 | 1-4, 8-10 |
| Y | CN 103711889 A (FOTON MOTOR INC.) 09 April 2014 (2014-04-09) description, paragraphs 0049-0056, figure 4 | 1-4, 8-10 |
| A | CN 106364369 A (WEICHAI POWER CO., LTD.) 01 February 2017 (2017-02-01) entire document | 1-10 |
| A | CN 108501765 A (GREAT WALL MOTOR CO., LTD.) 07 September 2018 (2018-09-07) entire document | 1-10 |
| A | CN 109050346 A (BEIJING CHJ INFORMATION TECHNOLOGY CO., LTD.) 21 December 2018 (2018-12-21) entire document | 1-10 |

☑ Further documents are listed in the continuation of Box C. ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **18 January 2022** | **26 January 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/129218**

| C. | DOCUMENTS CONSIDERED TO BE RELEVANT | |
|---|---|---|
| Category* | Citation of document, with indication, where appropriate, of the relevant passages | Relevant to claim No. |
| A | US 2010137097 A1 (KIA MOTORS CORPORATION et al.) 03 June 2010 (2010-06-03) entire document | 1-10 |

Form PCT/ISA/210 (second sheet) (January 2015)

**INTERNATIONAL SEARCH REPORT**
Information on patent family members

International application No.

**PCT/CN2021/129218**

| Patent document cited in search report | | | Publication date (day/month/year) | Patent family member(s) | | | Publication date (day/month/year) |
|---|---|---|---|---|---|---|---|
| CN | 112339576 | A | 09 February 2021 | None | | | |
| CN | 103587427 | A | 19 February 2014 | CN | 103587427 | B | 25 November 2015 |
| CN | 103711889 | A | 09 April 2014 | CN | 103711889 | B | 30 March 2016 |
| CN | 106364369 | A | 01 February 2017 | CN | 106364369 | B | 05 July 2019 |
| CN | 108501765 | A | 07 September 2018 | CN | 108501765 | B | 04 September 2020 |
| CN | 109050346 | A | 21 December 2018 | CN | 109050346 | B | 28 May 2021 |
| US | 2010137097 | A1 | 03 June 2010 | US | 8147374 | B2 | 03 April 2012 |
| | | | | JP | 2010132270 | A | 17 June 2010 |
| | | | | KR | 20100062637 | A | 10 June 2010 |
| | | | | KR | 100999234 | B1 | 07 December 2010 |

Form PCT/ISA/210 (patent family annex) (January 2015)

**REFERENCES CITED IN THE DESCRIPTION**

**Patent documents cited in the description**

- CN 202011239644